# EUROPÄISCHE PATENTSCHRIFT

(11) **EP 1 038 729 B1**
(45) Veröffentlichungstag und Bekanntmachung des Hinweises auf die Patenterteilung: **26.05.2004**
(21) Anmeldenummer: 00105140.8
(22) Anmeldetag: 10.03.2000
(51) Int. Cl.: B60R 1/06

(54) **Aussenspiegel für Kraftfahrzeuge**
Exterior rear view mirror for vehicles
Rétroviseur extérieur pour véhicules

(30) Priorität: 23.03.1999 DE 19913072
(43) Veröffentlichungstag der Anmeldung: 27.09.2000
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Winter, Brandl, Fürniss, Hübner, Röss, Kaiser, Polte Partnerschaft

(56) Entgegenhaltungen:
- EP-A- 0 705 733
- US-A- 4 991 950
- US-A- 5 137 247

## Beschreibung

Die Erfindung betrifft einen Außenspiegel für Kraftfahrzeuge gemäß dem Oberbegriff des Anspruchs 1.

Aus der DE-OS-43 39 279 ist ein Außenspiegel für Kraftfahrzeuge bekannt, bei dem in einem Spiegelgehäuse eine Trägerplatte angeordnet ist, die mittels einer Halterung an der Fahrzeugaußenseite befestigt wird. An der Trägerplatte ist eine Spiegelanordnung mit Spiegelscheibe ggfs. mit einer Verstelleinrichtung angeordnet. Ein vergleichbarer Außenspiegel ist auch aus der DE-OS-44 29 604 bekannt. Damit die Trägerplatte bei diesem Stand der Technik ihrer Trägerund Haltefunktion gerecht werden kann, muß sie vergleichsweise stabil sein, da sonst die Verbindung zur Halterung brechen könnte. Diese Stabilität wird durch eine entsprechend massive Konstruktion bzw. durch durch entsprechend stabiles Material erreicht. Die Massivität schränkt den im Spiegelgehäuse zur Verfügung stehenden Raum für Einbauten, wie elektromotorische Verstelleinrichtung, GPS-Module, Anzeigelement, Abstandssensoren, Fahrbahnerkennungssensoren usw. erheblich ein. Die Verwendung sehr stabiler Materialien ist aus Kostengründen nicht immer möglich

Die US 4,991 950, die einem Außenspiegel nach dem Oberbegrift des Anspruchs 1 betrifft, schlägt ver, eine Trägerplatte mittels verrippter Stege an einem Spiegelgehäuse zu befestigen.

Es ist daher Aufgabe der vorliegenden Erfindung, den aus der vorgenannten Druckschriften bekannten Außenspiegel derart weiterzubilden, daß ohne Einschränkung der Stabilität mehr Bauraum für Einbauten in das Spiegelgehäuse zur Verfügung steht.

Die Lösung dieser Aufgabe erfolgt durch die Merkmale des Anspruchs 1.

Dadurch, daß eine doppelwandige Trägerplatte mit einem Freiraum dazwischen und Stegen verwendet wird, wird zum einen eine hohe Stabilität erreicht und zum anderen kann der Freiraum zwischen den Stegen für Einbauten beliebiger Art genutzt werden. Darüber hinaus kann die Befestigung der Trägerplatte an der Halterung mittels eines Kopplungselements erfolgen, das in den Freiraum zwischen der Vorderund Rückwand der doppelwandigen Trägerplatte eingeschoben und fixiert wird. Durch die doppelwandige Trägerplatte mit Stegen dazwischen können Vorder-, Rückwand und Stege vergleichsweise dünn ausgebildet werden und dennoch wird eine hohe Stabilität erreicht. Die doppelwandige Trägerplatte kann aus Metall oder aufgrund der hohen Stabilität auch aus Kunststoff bestehen.

Gemäß einer bevorzugten Ausführungsform der Erfindung bildet die doppelwandige Trägerplatte an dem im Fahrzeug zugewandten Ende eine Schlaufe, in die ein Motor-Abklapper oder eine Vielzahnrasterung eingebaut werden kann. Die Schlaufe ermöglicht eine sehr gute kraftschlüssige Verbindung zwischen Halterung und Trägerplatte.

Gemäß einer weiteren bevorzugten Ausführungsform der Erfindung laufen Vorder- und Rückwand in Richtung auf das vom Fahrzeug abgewandte Ende hin keilförmig zusammen. Damit wird auf einfache Weise der größere Bauraum für den Motor-Abklapper am fahrzeugseitigen Ende bereitgestellt, während unnötiges Bauvolumen im Bereich des vom Fahrzeug abgewandten Endes vermieden wird.

Gemäß einer weiter bevorzugten Ausführungsform der Erfindung weist die doppelwandige Trägerplatte an den beiden Ende eine geringere Bauhöhe auf als dazwischen. Auf diese Weise kann die Trägerplatte der gewünschten Form des Außenspiegels angepaßt werden. Es sei darauf hingewiesen, daß die Form der Trägerplatte bzw. die Form der Vorder- und Rückwand beliebig ist und insbesondere können Vorder- und Rückwand eine unterschiedliche Flächenform aufweisen.

Gemäß einer weiter bevorzugten Ausführungsform der Erfindung ist die Spiegelanordnung mittels einer manuellen oder elektromotorischen Verstelleinrichtung mit der Trägerplatte verbunden. Die manuellen Verstelleinrichtung wird durch einen federvorbelasteten Bajonetttverschluß mit der Trägerplatte verbunden. Dieser Bajonettverschluß kann in vorteilhafter Weise in die doppelwandige Trägerplatte integriert sein.

Gemäß einer weiteren vorteilhaften Ausgestaltung der Erfindung sind in den Freiraum zwischen der Vorder- und Rückwand doppelwandigen Trägerplatte verschiedene Funktionselemente und insbesondere ein auf die Fahrbahn nach unten gerichter Fahrbahnmarkierungssensor eingebaut.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform der Erfindung anhand der Zeichnung.

Es zeigt:
Fig. 1 eine schematische Darstellung einer beispielhaften Ausführungsform des erfindungsgemäßen Außenspiegels, teilweise in Schnittdarstellung und teilweise aufgebrochen;
Fig. 2 ein perspektivische Darstellung des Außenspiegels nach Fig. 1 ohne Halterung; Fig. 3 die zugehörige Halterung zu dem Außenspiegel nach Fig. 1 in Schnittdarstellung;
Fig. 4 eine erste und eine zweite Variante der doppelwandigen Trägerplatte und einen Motor-Abklapper, und
Fig. 5 eine Horizontalschnittdarstellung durch die doppelwandige Trägerplatte nach Fig. 4;
Fig. 6 einen Schnitt durch eine manuelle Verstelleinrichtung für die Spiegelanordnung;
Fig. 7. ein Detail der manuellen Verstelleinrichtung nach Fig. 6; und
Fig. 8 eine elektromotorische Verstellanordnung für die Spiegelanordnung.

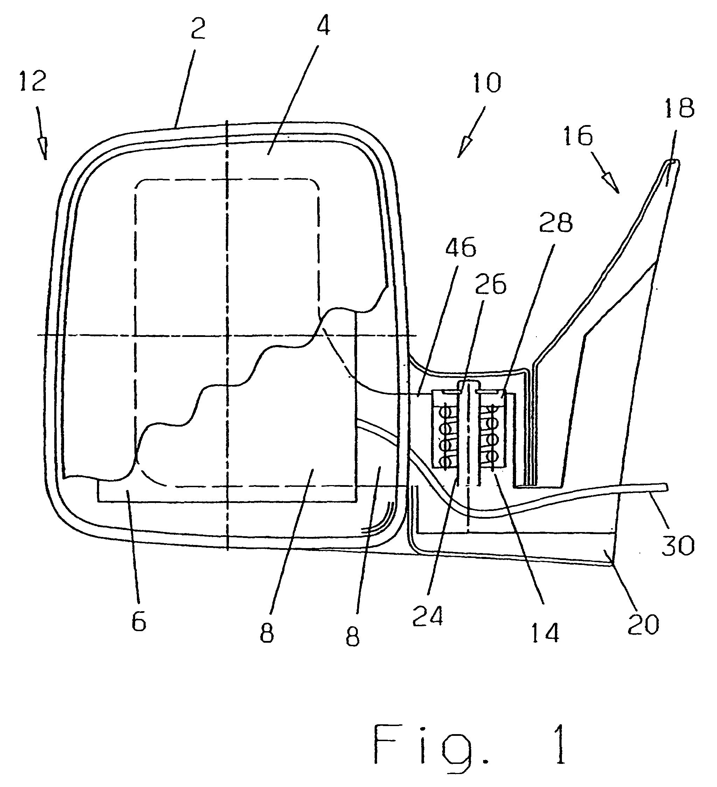

Fig. 1 zeigt eine beispielhafte Ausführungsform des erfindungsgemäßen Außenspiegels mit einem Spiegelgehäuse 2 und einer Spiegelscheibe 4, die auf einer sogenannten Rasterplatte 6 angeordnet ist. Hinsichtlich dieser Spiegelanordnung, die nachfolgend mit dem Bezugszeichen 7 bezeichnet wird, wird auf die Druckschrift EP-A-0 609 508 verwiesen. Details der Spiegelanordnung 7 sind in Fig. 6 dargestellt und werden nachfolgend im Text noch beschreiben.

In dem Spiegelgehäuse 2 ist eine doppelwandige Trägerplatte 8 angeordnet. Der Außenspiegel umfaßt ein dem Fahrzeug zugewandtes Ende 10 und ein von dem Fahrzeug abgewandtes Ende 12 auf. An den dem Fahrzeug zugewandten Ende 10 ist eine Scharnieröse 14 vorgesehen, mittels der die Verbindung zu einer Spiegelhalterung 16 erfolgt. Die Spiegelhalterung 16 ist im wesentlichen L-förmig ausgebildet und umfaßt einen längeren Schenkel 18 und einen kürzeren Schenkel 20. Der längere Schenkel 18 weist Schraublöcher 22 aufweist, mittels denen die Halterung 16 an dem Fahrzeug festgeschraubt werden kann. Der kürzere Schenkel 20 der Halterung 16 erstreckt sich vom Fahrzeug weg und weist eine Scharnierbohrung 24 auf. Die Scharnierbohrung 24 der Halterung 16 und die Scharnieröse 14 werden von einem Befestigungsbolzen 26 durchsetzt, der durch eine Spiralfeder 28 vorgespannt ist. Über ein Kabel 30 erfolgt die Stromversorgung und die signaltechnische Versorgung des Außenspiegels.

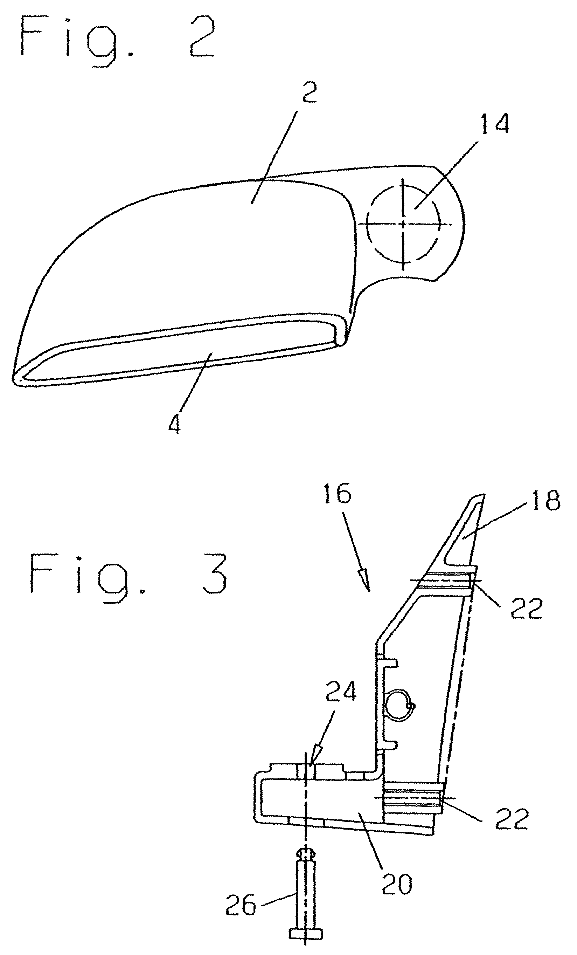

In Fig. 2 ist der Außenspiegel nach Fig. 1 perspektivisch von oben ohne Halterung dargestellt. Die Halterung ohne die übrigen Komponenten des Außenspiegels ist in Fig. 3 dargestellt.

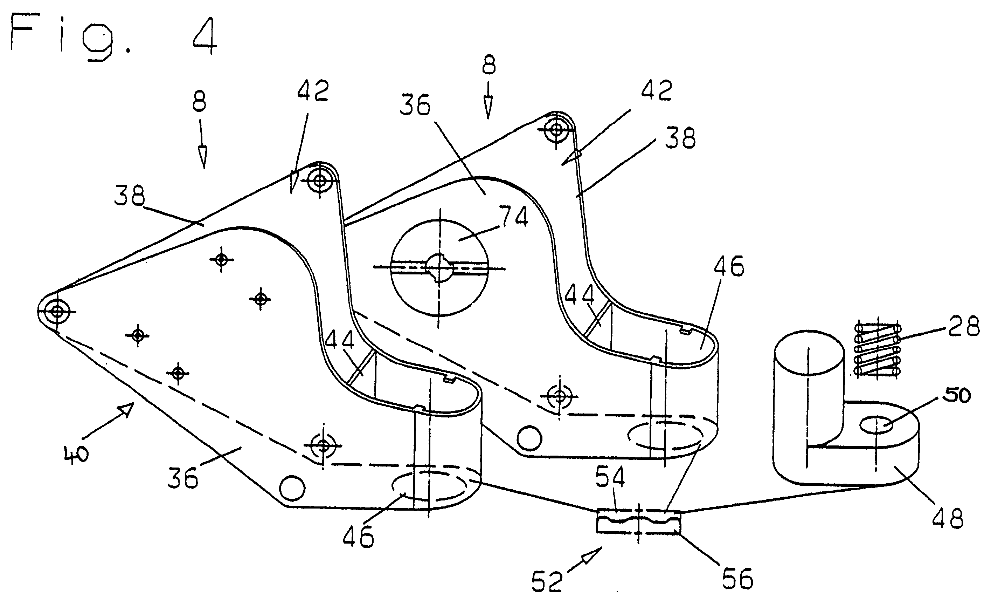

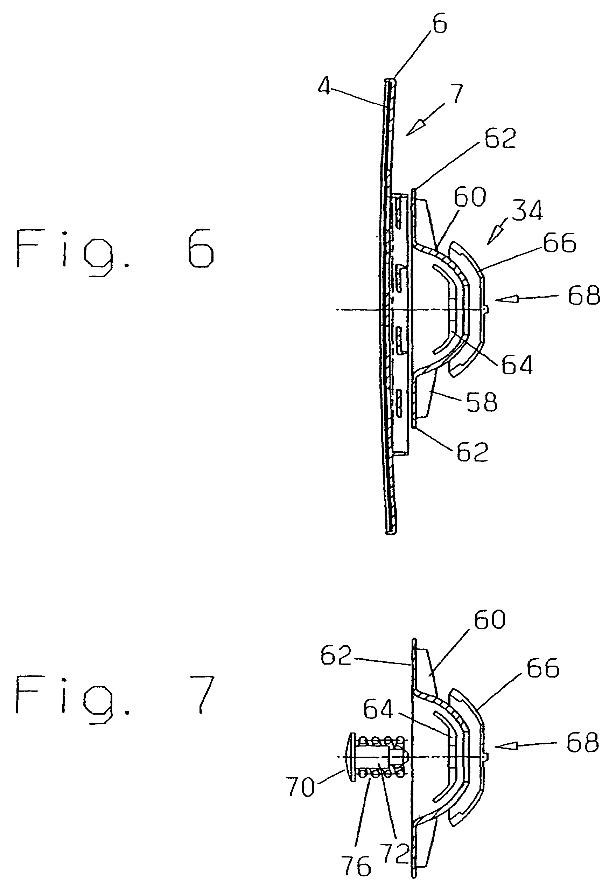

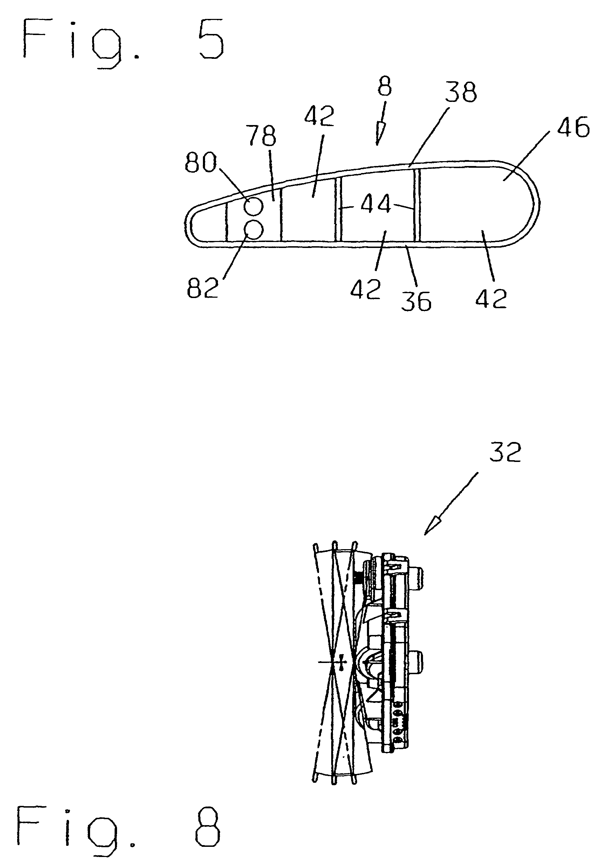

Fig. 4 zeigen zwei Varianten der doppelwandigen Trägerplatte 8. Die in Fig. 4 vordere Trägerplatte 8 ist eine Variante, bei der die Spiegelanordnung 7 mittels einer elektromotorischen Verstelleinrichtung 32, wie sie in Fig. 8 gezeigt ist, an der Trägerplatte 8 montiert ist. Die in Fig. 4 hintere Trägerplatte 8 ist eine Variante, bei der die Spiegelanordnung 7 mittels einer manuellen Verstelleinrichtung 34 an der Trägerplatte 8 montiert ist.

Die doppelwandige Trägerplatte 8 umfaßt jeweils eine Vorderwand 36 und eine Rückwand 38. Vorder- und Rückwand 36 und 38 werden durch U-förmiges Umbiegen einer Basisplatte 40 gebildet. Zwischen Vorder- und Rückwand 36, 38 ist ein ein Freiraum 42 aufgespannt, in dem die Vorder- und Rückwand 36, 38 verbindende Querstege 44 angeordnet sind. Durch die Querstege 44 wird die hohe Stabilität der doppelwandigen Trägerplatte 8 bereitgestellt. Die freien Enden der U-förmig umgebogenen Basisplatte 40 bzw. das von dem Fahrzeug abgewandte Ende 12 der Vorder- und Rückwand 36, 38 ist keilförmig zusammengeführt. Fig. 5 zeigt diese Anordnung im Schnitt. Durch das U-förmige Umbiegen der Basisplatte 40 wird an dem dem Fahrzeug zugewandten Ende 10 eine Schlaufe 46 gebildet, in die ein in Fig. 3 neben den Trägerplatten 8 dargestellter Motor-Abklapper 48 eingeführt und zwischen Vorder- und Rückwand 38, 36 fixiert wird.

Der Motor-Abklapper 48 wird elektrisch angetrieben und dient zum elektromotorischen Wegklappen des Außenspiegels bei Bedarf. Der Motor-Abklapper 48 weist eine Halterbohrung 50 auf. Die Schlaufe 46 der Trägerplatte 8 fluchtet mit der Scharnieröse 14 und wenn der Motor-Abklapper 48 in die Schlaufe 46 eingesetzt ist, fluchtet die Halterbohrung 50 mit der Scharnierbohrung 24 in dem kurzen Schenkel 20 der Halterung 16. In montiertem Zustand durchsetzt dann der Befestigungsbolzen 26 die Scharnierbohrung 24 und die Halterbohrung 50 und verbindet so die Spiegelhalterung 16 mit den übrigen Komponenten des Außenspiegels.

In Fig. 4 ist auch noch eine Vielzahnrasterung 52 dargestellt durch die der Außenspiegel gegenüber der Spiegelhalterung in bestimmten Winkeln arretierbar ist. Die Vielzahnrasterhalterung 52 umfaßt ein oberes Rasterteil 54 und ein dazu passendes unteres Rasterteil 56. Das obere Rasterteil 54 ist an der Unterseite des Motor-Abklappers 48 angeordnet und kommt in eingebautem Zustand an der Unterseite der Schlaufe 46 zu liegen. Das untere Rasterteil 56 ist auf dem kürzeren Schenkel 20 der Spiegelhalterung 16 um die Scharnierbohrung 24 angeordnet.

Fig. zeigt eine Schnittdarstellung einer Spiegelanordnung 7 mit der Spiegelscheibe 4, die auf der Rasterplatte 6 aufgesteckt ist. Der Aufbau dieser Spiegelanordnung 7 ist aus EP-A-0 609 508 bekannt. Die Rasterplatte 6 ist auf einer Halbkugelplatte 58 montiert, die ein Halbkugelteil 60 und einen planen Randbereich 62 aufweist. Der Halbkugelteil 60 ist zwischen einer inneren und einer äußeren Halteschale 64 und 66 eingeklemmt. Das Halbkubelteil 60 sowie die innere und die äußere Halteschale 64, 66 weisen eine zentrale Bohrung 68 auf, die von einem Montagebolzen 70 durchsetzt wird. Der Montagebolzen 70 umfaßt Bajonettelemete 72, die in einem entsprechenden Bajonettverschluß 74 in der doppelwandigen Trageplatte 8 eingreifen, wie dies aus Fig. 4 zu ersehen ist. Der Montagebolzen 74 durchsetzt auch noch eine Spiralfeder 76, so daß die auf der Halbkugelplatte 58 montierte Spiegelanordnung 7 mit Spiegelscheibe 4 manuell ververstell- bzw. verkippbar ist.

Die Horizontalschnittdarstellung der doppelwandigen Trägerplatte 8 in Fig. 5 zeigt einen Fahrbahnmarkierungserkennungssensor 78, der in den Freiraum 42 zwischen Vorderund Rückwand 36, 38 der doppelwandigen Trägerplatte 8 eingebaut ist. Der Fahrbahnmarkierungssensor umfaßt ein Infrarotsendeelement 80 sowie ein Infrarotempfangselement 82. In eingebautem Zustand ist der Sensor 78 bzw. Sende- und Empfangselement 80 und 82 nach unten auf die Fahrbahn gerichtet und eine Fahrbahnmarkierung wird durch die unterschiedliche Reflektivität erkannt. Derartige Sensoren 78 werden beispielsweise von der Firma ADC GmbH in Lindau angeboten.

Der Freiraum 42 zwischen den Querstegen 44, kann auch noch zum Einbau anderer Funktionselemente, wie GPS-Empfangseinheit usw. benutzt werden.

### Bezugszeichenliste

- 2: Spiegelgehäuse
- 4: Spiegelscheibe
- 6: Rasterplate
- 7: Speigelanordnung
- 8: doppelwandige Trägerplatte
- 10: dem Fahrzeug zugewandtes Ende
- 12: von dem Fahrzeug abgewandtes Ende
- 14: Scharnieröse
- 16: Spiegelhalterung
- 18: längere Schenkel von 16
- 20: kürzerer Schenkel von 16
- 22: Schraublöcher
- 24: Scharnierbohrung
- 26: Befestigungsbolzen
- 28: Spiralfeder
- 30: Kabel
- 32: elektromotrische Verstelleinrichtung
- 34: manuelle Verstelleinrichtung
- 36: Vorderwand von 8
- 38: Rückwand von 8
- 40: Basisplatte
- 42: Freiraum
- 44: Querstege
- 46: Schlaufe
- 48: Motor-Abklapper
- 50: Halterbohrung
- 52: Vielzahnrasterung
- 54: oberes Rasterteil
- 56: unteres Rasterteil
- 58: Halbkugelplatte
- 60: Halbkugelteil
- 62: Randbereich von 58
- 64: innere Halteschale
- 66: äußere Halteschale
- 68: zentrale Bohrung
- 70: Montagebolzen
- 72: Bajonettelemente
- 74: Bajonetverschluß
- 76: Spiralfeder
- 78: Fahrbahnmarkierungserkennungssensor
- 80: IR-Senderelement
- 82: IR-Empfangselement

## Patentansprüche

1. Außenspiegel für Kraftfahrzeuge mit
einer Spiegelhalterung (16) zur Befestigung des Spiegels am Kraftfahrzeug,
einer in einem Spiegelgehäuse (2) angeordneten Trägerplatte (8), die an der Spiegelhalterung (16) befestigt ist,
mindestens einer an der Trägperplatte (8) befestigten Spiegelanordnung (7) mit Spiegelscheibe (4),
**dadurch gekennzeichnet,**
**daß** die Trägerplatte (8) doppelwandig mit einer Vorderwand (36) und einer Rückwand (38) mit einem Freiraum (42) dazwischen ausgebildet ist, und
**daß** in dem Freiraum (42) die Vorder- und Rückwand (36, 38) verbindende Querstege (44) angeordnet sind.

2. Außenspiegel nach Anspruch 1, **dadurch gekennzeichnet, daß** die doppelwandige Trägerplatte (8) ein dem Fahrzeug zugewandtes Ende (10) und ein von dem Fahrzeug abgewandtes Ende (12) aufweist, und daß die doppelwandige Trägerplatte (8) an dem dem Fahrzeug zugewandten Ende (10) an der Spiegelhalterung (16) lösbar und in unterschiedlichen Winkelstellungen fixierbar befestigt ist.

3. Außenspiegel nach Anspruch 2, **dadurch gekennzeichnet, daß** die doppelwandige Trägerplatte (8) und die Spiegelhalterung (16) mittels eines Motor-Abklappers (48) miteinander verbunden sind.

4. Außenspiegel nach Anspruch 2, **dadurch gekennzeichnet, daß** die doppelwandige Trägerplatte (8) und die Spiegelhalterung (16) mittels einer Vielzahnrastung (52) miteinander verbunden sind.

5. Außenspiegel nach einem der vorhergehenden Ansprüche, **dadurch gekennzeichnet, daß** Vorder- und Rückwand (36, 38) durch U-förmiges Verbiegen einer Basisplatte (40) gebildet sind, so daß das dem Fahrzeug zugewandte Ende (10) der Trägerplatte (8) durch eine Schlaufe (46) und das von dem Fahrzeug abgewandte Ende (12) der Trägerplatte (8) durch freie U-Schenkel gebildet wird.

6. Außenspiegel nach Anspruch 5, **dadurch gekennzeichnet, daß** die Vorder- und Rückwand (36, 38) zu dem vom Fahrzeug abgewandten Ende (12) hin keilförmig zusammenlaufen.

7. Außenspiegel nach Anspruch 5 oder 6, **dadurch gekennzeichnet, daß** der Motor-Abklapper (48) in die Schlaufe (46) an dem dem Fahrzeug zugewandten Ende (10) der Trägrägerplatte (8) eingesetzt ist.

8. Außenspiegel nach einem der vorhergehenden Ansprüche, **dadurch gekennzeichnet, daß** die doppelwandige Trägerplatte (8) an den beiden Enden (10, 12) eine geringer Höhe aufweist als in einem Bereich dazwischen.

9. Außenspiegel nach einem der vorhergehenden Ansprüche, **dadurch gekennzeichnet, daß** die Spiegelanordnung (7) eine Verstelleinrichtung (32; 34) umfaßt, so daß die Spiegelscheibe (4) gegenüber der Trägerplatte (8) verkippbar ist.

10. Außenspiegel nach Anspruch 9, **dadurch gekennzeichnet, daß** die Verstelleinrichtung eine manuelle Verstelleinrichtung (34) ist.

11. Außenspiegel nach Anspruch 10, **dadurch gekennzeichnet, daß** die manuelle Verstelleinrichtung (34) eine Halbkugelplatte (58) umfaßt, an der die Spiegelscheibe (4) befestigt ist, und die zwischen einer inneren und einer äußeren Halteschale (64, 66) verkippbar angeordnet ist, und daß Halbkugelplatte (58) und die beiden Halteschalen (64, 66) durch einen Montagebolzen (70) mit Federelement (76) durchsetzt sind.

12. Außenspiegel nach Anspruch 11, **dadurch gekennzeichnet, daß** der Montagebolzen (70) mittels einem in die Vorderwand (36) der Trägerplatte (8) integriererten Bajonettverschluß (72, 74) an der Trägerplatte (8) befestigt ist.

13. Außenspiegel nach Anspruch 9, **dadurch gekennzeichnet, daß** die Verstelleinrichtung eine elektromotrische Verstelleinrichtung (34) ist.

14. Außenspiegel nach einem der vorhergehenden Ansprüche, **dadurch gekennzeichnet, daß** die Spiegelhalterung (16) L-förmiger ist und einen langen Schenkel (18) und einen kurzen Schenkel (20) aufweist, daß der lange Schenkel (18) an dem Fahrzeug befestigbar ist und daß an dem kurzen Schenkel (20) die doppelwandige Trägeplatte (8) befestigt ist.

15. Außenspiegel nach einem der vorhergehenden Ansprüche, **dadurch gekennzeichnet, daß** in den Freiraum (42) der Trägerplatte (8) zwischen Vorder-, Rückwand (36, 38) und den Querstegen (44) ein Fahrbahnmarkierungserkennungssensor eingebaut ist.

## Claims

1. An outside mirror for motor vehicles, comprising
a mirror holder (16) for fastening the mirror on the motor vehicle,
a carrier plate (8) which is arranged in a mirror housing (2) and affixed to the mirror holder (16),
at least one mirror arrangement (7) affixed on the carrier plate (8) and including a mirror pane (4),
**characterized in that**
the carrier plate (8) is double walled with a front wall (36) and a rear wall (38) having a free space (42) formed between them, and
**in that** cross webs (44) connecting the front and rear walls (36, 38) are arranged in the free space (42).

2. An outside mirror in accordance with claim 1, **characterized in that** the double walled carrier plate (8) has an end (10) facing the vehicle and an end (12) facing away from the vehicle, and **in that** the double walled carrier plate (8), at the end (10) facing the vehicle, is releasably fastened to the mirror holder (16) so as to be adjustable in different angular settings.

3. An outside mirror in accordance with claim 2, **characterized in that** the double walled carrier plate (8) and the mirror holder (16) are connected with each other by means of a motorized fold-up apparatus (48).

4. An outside mirror in accordance with claim 2, **characterized in that** the double walled carrier plate (8) and the mirror holder (16) are connected with each other by a multitooth indexer (52).

5. An outside mirror in accordance with any one of the preceding claims, **characterized in that** the front and rear walls (36, 38) are formed by a U-shaped bending of a base plate (40), so that the end (10) of the carrier plate (8) facing the vehicle is formed by a loop (46), and the end (12) of the carrier plate (8) facing away from the vehicle is formed by free legs of the U-shape.

6. An outside mirror in accordance with claim 5, **characterized in that** the front and rear walls (36, 38) are inclined in wedge shape toward one another in the direction of the end (12) remote from the vehicle.

7. An outside mirror in accordance with claim 5 or 6, **characterized in that** the motorized fold-up apparatus (48) is inserted into the loop (46) on the end (10) of the carrier plate (8), which said end is proximal to the vehicle.

8. An outside mirror in accordance with any one of the preceding claims, **characterized in that** the double walled carrier plate (8) exhibits a lesser height at the two ends (10, 12) than in an intermediate zone.

9. An outside mirror in accordance with any one of the preceding claims, **characterized in that** the mirror arrangement (7) includes positioning means (32; 34) whereby the mirror pane (4) may be tilted relative to the carrier plate (8).

10. An outside mirror in accordance with claim 9, **characterized in that** the positioning means are manual positioning means (34).

11. An outside mirror in accordance with claim 10, **characterized in that** the manual positioning means (34) include a hemispherical plate (58) on which the mirror pane (4) is fastened and which is arranged between inner and outer retaining shells (64, 66) so as to be capable of being tilted, and that a mounting bolt (70) with a helical spring (76) extends through the hemispherical plate (58) and the two retaining shells (64, 66).

12. An outside mirror in accordance with claim 11, **characterized in that** the mounting bolt (70) is fastened to the carrier plate (8) by means of a quarter-turn fastener (72, 74) integrated into the front wall (36) of the carrier plate (8).

13. An outside mirror in accordance with claim 9, **characterized in that** the positioning means are an electric motor driven positioning means (34).

14. An outside mirror in accordance with any one of the preceding claims, **characterized in that** the mirror holder (16) is L-shaped and has a long leg (18) and a short leg (20), the long leg (18) is attachable to the vehicle, and the double walled carrier plate (18) is fastened to the short leg (20).

15. An outside mirror in accordance with any one of the preceding claims, **characterized in that** a road marking detection sensor is installed in the free space (42) of the carrier plate between the front and rear walls (36, 38) and the cross webs (44).

## Revendications

1. Rétroviseur extérieur pour véhicules automobiles, comportant :
une retenue (16) de rétroviseur destinée à la fixation du rétroviseur sur le véhicule automobile,
une plaque de support (8) disposée dans un carter (2) de rétroviseur, qui est fixée sur la retenue (16) de rétroviseur,
au moins un système de rétroviseur (7) avec un disque de miroir (4) fixé sur la plaque de support (8),
**caractérisé en ce que**
la plaque de support (8) est agencée avec une double paroi, et comporte une paroi avant (36) et une paroi arrière (38), entre lesquelles est situé un espace libre (42), et
des entretoises transversales (44) reliant les parois avant et arrière (36, 38) sont disposées dans l'espace libre (42).

2. Rétroviseur extérieur selon la revendication 1, **caractérisé en ce que** la plaque de support (8) à double paroi comporte une extrémité (10) orientée vers le véhicule, et une extrémité (12) opposée au véhicule, et **en ce que**, sur l'extrémité (10) orientée vers le véhicule, la plaque de support (8) à double paroi est fixée de façon amovible sur la retenue (16) de rétroviseur et de manière à pouvoir être bloquée dans différentes positions angulaires.

3. Rétroviseur extérieur selon la revendication 2, **caractérisé en ce que** la plaque de support (8) à double paroi et la retenue (16) de rétroviseur sont reliées entre elles au moyen d'un système de rabattement motorisé (48).

4. Rétroviseur extérieur selon la revendication 2, **caractérisé en ce que** la plaque de support (8) à double paroi et la retenue (16) de rétroviseur sont reliées entre elles au moyen d'un encliquetage à crans multiples (52).

5. Rétroviseur extérieur selon l'une quelconque des revendications précédentes, **caractérisé en ce que** les parois avant et arrière (36, 38) sont réalisées par le cintrage en forme de U d'une plaque de base (40), de sorte que l'extrémité (10) de la plaque de support (8) orientée vers le véhicule soit formée par une boucle (46), et l'extrémité (12) de la plaque de support (8) opposée au véhicule par des ailes libres en forme de U.

6. Rétroviseur extérieur selon la revendication 5, **caractérisé en ce que** les parois avant et arrière (36, 38) convergent de façon cunéiforme vers l'extrémité (12) opposée au véhicule.

7. Rétroviseur extérieur selon la revendication 5 ou 6, **caractérisé en ce que** le système de rabattement motorisé (48) est monté dans la boucle (46) située sur l'extrémité (10) de la plaque de support (8) orientée vers le véhicule.

8. Rétroviseur extérieur selon l'une quelconque des revendications précédentes, **caractérisé en ce que** la hauteur de la plaque de support (8) à double paroi est moins importante au niveau des deux extrémités (10, 12) que dans la zone située entre ces dernières.

9. Rétroviseur extérieur selon l'une quelconque des revendications précédentes, **caractérisé en ce que** le système de rétroviseur (7) comporte un dispositif de réglage (32 ; 34), de sorte que le disque de miroir (4) puisse être réglé par rapport à la plaque de support (8).

10. Rétroviseur extérieur selon la revendication 9, **caractérisé en ce que** le dispositif de réglage est un dispositif de réglage manuel (34).

11. Rétroviseur extérieur selon la revendication 10, **caractérisé en ce que** le dispositif de réglage manuel (34) comporte une plaque hémisphérique (58), sur laquelle est fixé le disque de miroir (4), et qui est montée de façon à pouvoir basculer entre une coque de retenue intérieure et une coque de retenue extérieure (64, 66), et **en ce que** la plaque hémisphérique (58) et les deux coques de retenue (64, 66) sont traversées par un boulon de montage (70) comportant un élément de ressort (76).

12. Rétroviseur extérieur selon la revendication 11, **caractérisé en ce que** le boulon de montage (70) est fixé sur la plaque de support (8) au moyen d'un emboîtement à baïonnette (72, 74) intégré dans la paroi avant (36) de la plaque de support (8).

13. Rétroviseur extérieur selon la revendication 9, **caractérisé en ce que** le dispositif de réglage est un dispositif de réglage (34) à moteur électrique.

14. Rétroviseur extérieur selon l'une quelconque des revendications précédentes, **caractérisé en ce que** la retenue (16) de rétroviseur a la forme d'un L, et comporte une aile longue (18) et une aile courte (20), **en ce que** l'aile longue (18) peut être fixée sur le véhicule, et **en ce que** la plaque de support (8) à double paroi est fixée sur l'aile courte (20).

15. Rétroviseur extérieur selon l'une quelconque des revendications précédentes, **caractérisé en ce qu'**un détecteur de marquage de voie de roulement est monté dans l'espace libre (42) de la plaque de support (8), entre les parois avant et arrière (36, 38) et les entretoises transversales (44).
